Europäisches Patentamt

European Patent Office

Office européen des brevets

(19)

(11) Numéro de publication: **0 201 439**
**B1**

(12) **FASCICULE DE BREVET EUROPEEN**

(45) Date de publication du fascicule du brevet:
**26.10.88**

(21) Numéro de dépôt: **86420119.9**

(22) Date de dépôt: **06.05.86**

(51) Int. Cl.⁴: **F 24 F 7/06,** F 24 F 11/04,
F 16 K 31/524

(54) **Dispositif de ventilation d'un local, avec variation automatique du débit extrait dans la cuisine.**

(30) Priorité: **07.05.85 FR 8507324**

(43) Date de publication de la demande:
**17.12.86 Bulletin 86/46**

(45) Mention de la délivrance du brevet:
**26.10.88 Bulletin 88/43**

(84) Etats contractants désignés:
**AT BE CH DE GB IT LI LU NL SE**

(56) Documents cités:
**DE - A - 2 431 066**
**FR - A - 1 344 040**
**FR - A - 1 417 323**
**FR - A - 1 507 329**
**FR - A - 2 148 091**
**FR - A - 2 179 517**
**FR - A - 2 237 133**
**US - A - 4 372 196**

(73) Titulaire: **ALDES ATELIERS LYONNAIS D'EMBOUTISSAGE SPECIAL Société Anonyme de droit français, 82, rue Feuillat, F-69008 Lyon (FR)**

(72) Inventeur: **Salagnac, François, Rue de Jons, Balan Ain (FR)**

(74) Mandataire: **Maureau, Philippe et al, Cabinet Germain & Maureau Le Britannia - Tour C 20, bld Eugène Déruelle Boîte Postale 3011, F-69392 Lyon Cédex 03 (FR)**

ACTORUM AG

## Description

La présente invention a pour objet un dispositif de ventilation de locaux, et notamment d'une maison individuelle d'habitation.

En raison des conditions d'isolation et d'étanchéité des bâtiments, mises en oeuvre pour réduire les dépenses de chauffage, il est nécessaire d'équiper ceux-ci de dispositifs de ventilation assurant un renouvellement d'air suffisant pour procurer un bon confort aux utilisateurs et pour éviter la condensation d'eau à l'intérieur des pièces, provoquant des moisissures.

Un dispositif de ventilation comprend généralement un groupe moto-ventilateur placé dans les combles d'une maison, permettant d'extraire l'air vicié des pièces techniques, telles que cuisines, salles de bains, W.C., d'une façon permanente et constante, tandis que les pièces de séjour et chambre sont équipées de bouches assurant l'admission d'un volume d'air extérieur égal au volume d'air extrait dans les pièces techniques.

La réglementation en vigueur impose la possibilité de pouvoir augmenter, au gré de l'usager, le débit extrait en cuisine, afin de mieux évacuer les odeurs et buées au moment de la préparation des repas.

Cette variation de débit peut être obtenue de différentes façons:

Une première solution consiste à utiliser un moteur à deux allures délivrant deux courbes débit-pression différentes. Il s'agit d'une solution chère car nécessitant deux enroulements principaux pour le moteur, ainsi que l'utilisation de deux condensateurs.

Le document FR-A-2 179 517 concerne un dispositif de ventilation de ce type, comportant en outre des vannes montées sur les différents orifices d'admission d'air dans le caisson contenant le ventilateur, l'ouverture de ces vannes étant asservie à la vitesse de rotation du ventilateur, de telle sorte que le passage d'une vitesse de rotation à l'autre se traduise par une modification de la répartition de l'air extrait dans les différentes pièces.

Une seconde solution consiste à équiper le ventilateur d'un moteur à un enroulement principal à glissement en utilisant tout ou partie du bobinage pour obtenir la variation de vitesse. Si ce dispositif est meilleur marché que le précédent, la stabilité des vitesses est beaucoup plus aléatoire, notamment lorsque la tension d'alimentation fluctue.

Une autre possibilité consiste à disposer d'un moteur à une vitesse avec possibilité d'inversion du sens de rotation pour obtenir deux courbes différentes, avec une roue ambivalente.

Il s'agit d'une solution relativement bon marché, mais qui nécessite une augmentation artificielle des dimensions du caisson et de la roue.

Une autre possibilité consiste à utiliser un moteur à une allure avec un système d'obturateur variable manuellement, installé dans la manchette de raccordement de la bouche d'extraction de la cuisine. Cette solution est bon marché mais peu intéressante du fait de l'actionnement manuel de la bouche.

La présente invention vise à remédier à ces inconvénients en fournissant un dispositif de conception simple, de fonctionnement fiable, de réalisation économique, permettant automatiquement une augmentation du débit extrait en cuisine.

A cet effet, dans le dispositif qu'elle concerne, du type comprenant un caisson à l'intérieur duquel est monté un groupe moto-ventilateur et dans lequel sont ménagées des ouvertures équipées de moyens de raccordement à des tubulures débouchant dans les différentes pièces techniques telles que cuisine, salles d'eau et W.C., l'ouverture du caisson destinée au raccordement de la tubulure débouchant dans la cuisine est équipée d'un volet associé à des moyens élastiques tendant à le manoeuvrer vers sa position de fermeture, ce volet étant équipé d'un organe coopérant avec un guide comportant deux butées correspondant aux deux valeurs d'ouverture du volet et deux autres butées décalées l'une par rapport à l'autre, correspondant toutes deux à la position fermée du volet, le guide du doigt étant conformé de façon telle que le volet étant en position fermée et le doigt étant en appui dans le fond de la première butée de fermeture, la dépression créée par le ventilateur tendant à ouvrir le volet amène le doigt en appui contre la première butée d'ouverture, l'arrêt du ventilateur à la suite duquel le volet revient en position fermée amène le doigt en appui contre la seconde butée de fermeture, la mise en marche du ventilateur tendant à ouvrir le volet amène le doigt en appui contre la seconde butée d'ouverture, et l'arrêt du ventilateur accompagné de la fermeture du volet amène le doigt en appui contre la première butée de fermeture.

Le volet étant dans sa position correspondant au régime normal d'extraction, il suffit, pour passer au régime d'extraction maximale en cuisine, d'arrêter le moto-ventilateur puis de le remettre en marche. La même manoeuvre permet de repasser du régime d'extraction maximale au régime normal d'extraction.

Cette technique est intéressante d'un point de vue économique, car si ce dispositif peut fonctionner avec des ventilateurs à deux allures de rotation ou à inversion de sens, il peut également fonctionner avec un ventilateur à une seule allure de rotation.

Selon une forme d'exécution de ce dispositif, les moyens assurant le maintien du volet, associé à l'ouverture reliée au conduit d'extraction de l'air de la cuisine, dans ses deux position, et le passage d'une position à l'autre, sont constitués par un levier situé du côté de l'intérieur ou de l'extérieur du caisson, dont une extrémité est articulée sur le volet autour d'un axe parallèle à l'axe d'articulation du volet et dont l'autre extrémité est équipée d'un doigt parallèle à l'axe d'articulation de celui-ci sur le volet, engagé dans une lumière formant guide.

Avantageusement, la lumière de guidage du doigt de commande du volet est constituée par une empreinte de forme générale triangulaire dont un des côtés sensiblement parallèle au plan de l'ouverture destinée à être obturée par le volet, comprend deux évidements séparés l'un de l'autre par un bec formant les deux butées de fermeture du doigt, la partie centrale du triangle comportant une nervure inclinée par rapport au côté dans lequel sont ménagés les évidements, une extrémité de cette nervure étant située en regard du premier évidement et l'autre extrémité de celle-ci comportant un évidement formant la première butée d'ouverture débouchant en regard de la paroi du bec délimitant pour partie le second évidement, la seconde butée d'ouverture étant constituée par le troisième sommet de l'empreinte.

Compte tenu des positions respectives des évidements formant butées et des rampes, le doigt ne peut se déplacer dans la lumière, en fonction des arrêts et mises en marche du ventilateur, que selon un circuit bien déterminé.

Avantageusement, le volet associé à l'ouverture du caisson raccordée à la cuisine est solidaire d'un levier portant des obturateurs destinés à venir fermer totalement ou partiellement les ouvertures du caisson raccordées aux autres pièces techniques, lorsque le volet est en position d'ouverture maximale.

Cet agencement permet, par augmentation de la section de passage de l'air extrait en cuisine et par diminution de la section de passage de l'air extrait dans les autres pièces techniques, de concentrer une grande partie du débit extrait sur la cuisine, ce qui est particulièrement avantageux car permettant l'extraction d'un débit important en cuisine sans nécessité de disposer d'un moto-ventilateur de débit et de puissance importants.

Selon une autre caractéristique intéressante de l'invention, les moyens de commande du ventilateur sont tels que l'utilisateur n'ait pas à arrêter pendant une période de temps qui pourrait être indéterminée, le groupe de ventilation.

A cet effet, le circuit d'alimentation électrique du moteur du ventilateur comprend une lame de contact pouvant être actionnée à l'ouverture par un bouton poussoir vers une position dans laquelle elle est maintenue en position ouverte par une bilame, associée à une résistance, la bilame assurant le maintien de la lame en position d'ouverture du contact électrique tant qu'elle n'a pas atteint une température prédéterminée fournie par chauffage de la résistance.

Pour passer d'une régime de fonctionnement à l'autre, il suffit à l'utilisateur d'appuyer sur le bouton poussoir. Au cours de ce mouvement, l'alimentation en courant électrique demeure coupée tant que la bilame n'est pas déformée, le temps de chauffage suffisant pour assurer cette déformation pouvant être choisi de l'ordre de 10 à 15 secondes. Lorsque le contact se referme, le volet occupera une position d'ouverture différente de la position précédant la coupure d'alimentation, ce qui permet une modification du débit extrait en cuisine.

De toute façon, l'invention sera bien comprise à l'aide de la description qui suit en référence au dessin schématique annexé représentant une forme d'exécution de ce dispositif:

figure 1 est une vue en perspective d'un caisson d'extraction;

figure 2 est une vue en coupe transversale et à échelle agrandie de la partie de ce caisson à laquelle sont raccordés les conduits d'évacuation d'air vicié;

figure 3 est une vue à échelle agrandie d'un détail de figure 2;

figures 4 à 6 sont trois vues correspondant à trois phases de fonctionnement autres que celle correspondant à la position représentée à la figure 1;

figures 7 et 8 sont deux vues très schématiques de l'interrupteur d'alimentation en courant du moteur du ventilateur.

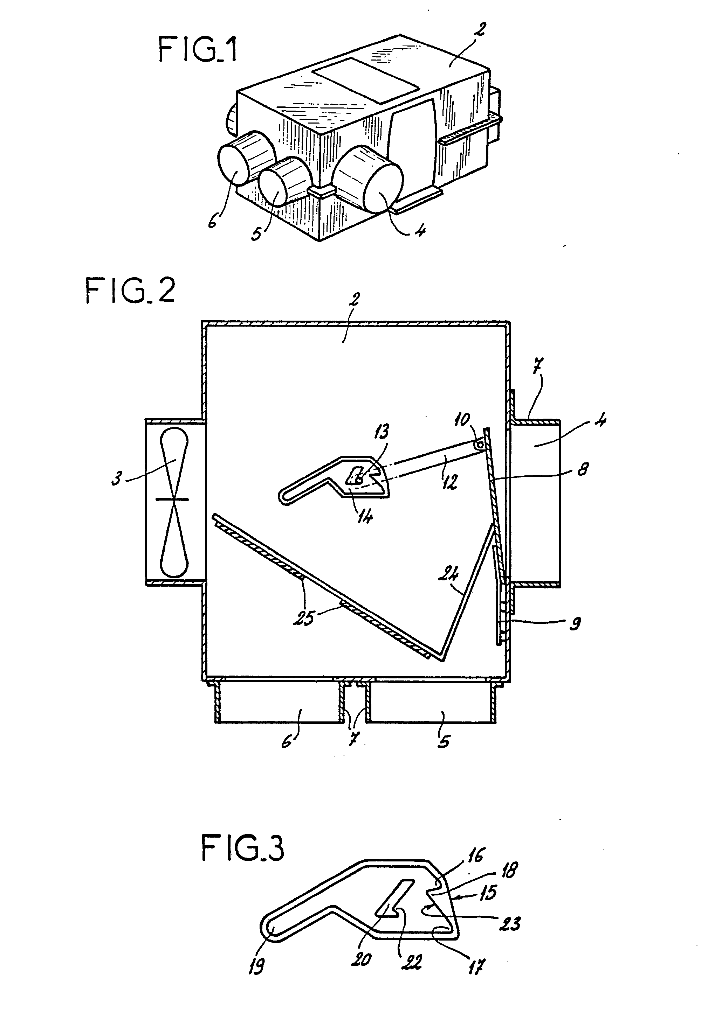

La figure 1 représente un caisson (2) destiné à être placé dans les combles d'une maison d'habitation, contenant un moteur non représenté entraînant un ventilateur (3). Dans ce caisson, sont ménagés trois ouvertures (4, 5 et 6) équipées de manchettes (7) permettant leur raccordement à des tubulures, non représentées, dont les autres extrémités sont connectées à des bouches d'extraction disposées respectivement dans la cuisine, une salle d'eau et les W.C. de l'habitation.

A l'ouverture (4) d'extraction en cuisine, est associé un volet (8) articulé autour d'un axe vertical constitué dans le cas présent, par une lame élastique (9) assurant également la fonction de rappel du volet (8) en position de fermeture.

A proximité de l'extrémité du volet (8) opposée à la lame (9) est articulé, autour d'un axe vertical (10), un levier (12) dont l'autre extrémité est équipée d'un doigt (13) également vertical, engagé dans une lumière (14) ménagée dans le fond du caisson (2) ou dans un organe susceptible d'être fixé sur ledit fond.

La lumière de guidage (14) est constituée par une empreinte de forme générale triangulaire, dont un côté (15) sensiblement parallèle au plan de l'ouverture (4) destiné à être obturé par le volet (8) comprend deux évidements (16, 17) séparés l'un de l'autre par un bec (18). L'angle du triangle opposé à la paroi (15) forme un évidement (19). Enfin, la partie centrale de l'empreinte est occupée par une nervure (20) inclinée par rapport au côté (15) du triangle, de telle façon qu'elle est plus proche de l'évidement (16) que de l'évidement (17), cette nervure (20) comportant une extrémité située en regard de l'évidement (16), et une autre extrémité, présentant un évidement (22) situé en retrait de l'évidement (17), et débouchant en regard de la paroi (23) délimitant pour partie l'évidement (17).

En pratique, la lame souple (9) tend à faire pivoter le volume (8) vers sa position de fermeture, de telle sorte que le doigt (13) du levier (12) se trouve soit dans l'évidement (16), soit dans l'évidement (17). Lorsque le ventilateur (3) crée une dépression à l'intérieur du caisson, le volet (8) tend à s'ouvrir, et le doigt (13) prend appui soit dans un évidement (19) soit dans un évidement (22).

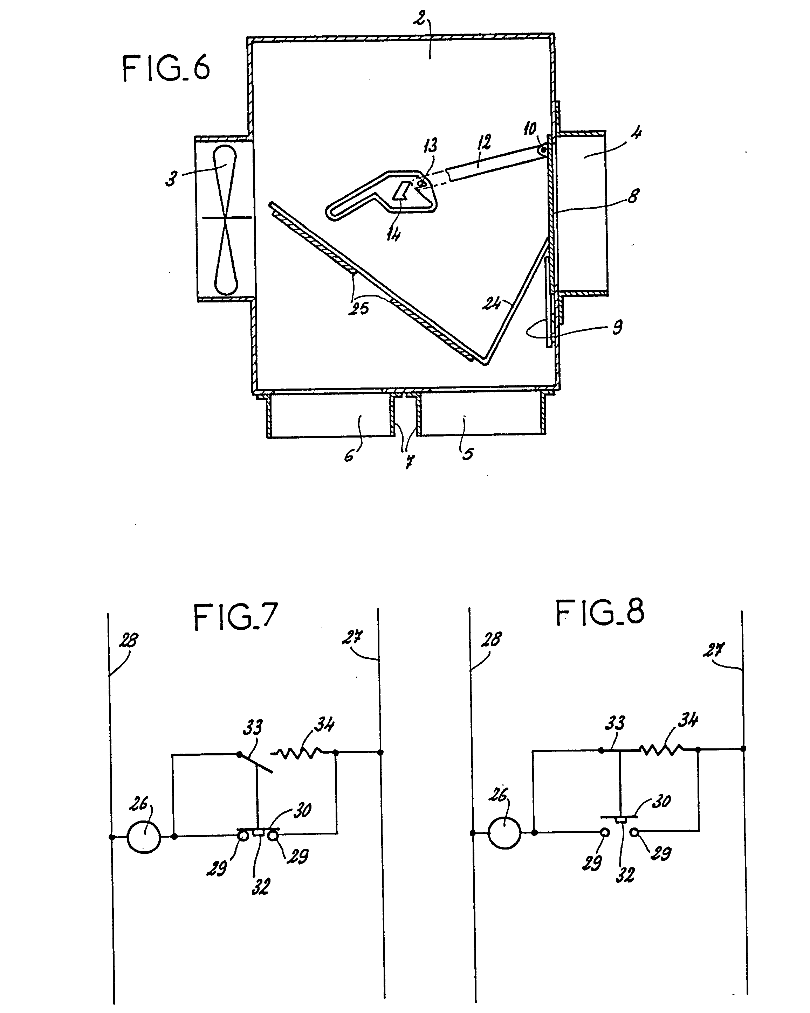

En régime normale de fonctionnement, le volet est dans la position représentée à la figure 2, le doigt (13) étant en appui dans l'évidement (22). Pour augmenter le débit extrait en cuisine, il suffit à l'utilisateur tout d'abord d'arrêter le moteur du ventilateur. Sous l'action du rappel de la lame (9), le volet (8) se ferme, et le doigt (13) prenant appui contre la paroi (23) vient dans le fond de l'évidement (17). Lorsque le ventilateur est remis en marche, le doigt (13) se déplace dans la rainure lui servant de guidage et vient en appui dans le fond de l'évidement (19), position dans laquelle le volet (8) occupe une ouverture maximale comme montré à la figure 5. Pour revenir au régime normal de fonctionnement, il convient tout d'abord de couper le ventilateur assurant la fermeture du volet (8), le doigt (13) après avoir pris appui sur la nervure (20) venant en appui dans le fond de l'évidement (16). La remise en marche du moteur assure l'ouverture du volet (8) dans la position représentée à la figure 2, après appui du doigt (13) contre la nervure (20) et blocage dans l'évidement (22).

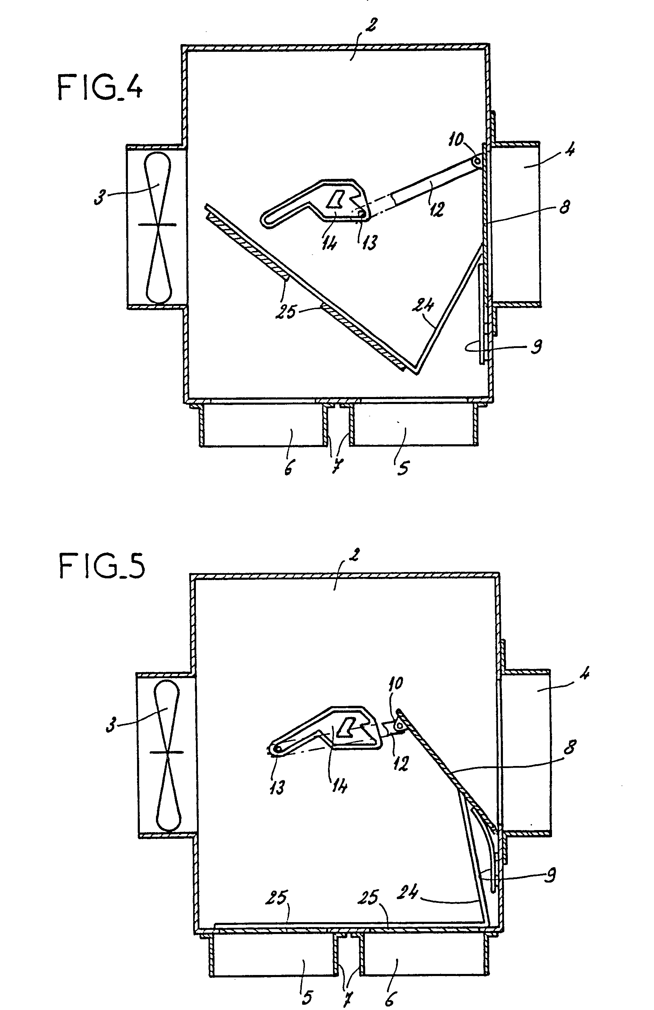

Avantageusement, et comme montré aux figures 2 à 6, le volet (8) porte un levier (24) équipé d'obturateurs (25), conformé de façon telle que, lorsque le volet (8) est en position d'ouverture maximale, comme montré à la figure 5, les obturateurs (25) viennent fermer les ouvertures (5, 6) afin de concentrer l'extraction du débit sur la cuisine.

Les figures 7 et 8 représentent un dispositif de commande de l'alimentation du moteur (26) assurant l'entraînement du ventilateur (3). Les fils de phase et neutre sont désignés par les références (27) et (28) respectivement. Un contact (29) d'alimentation est fermé par une lame (30) associée à un bouton poussoir (32). Sous l'action du bouton poussoir, la lame (30) peut actionner une bilame (33) venant se crocheter contre l'extrémité d'une résistance (34) assurant le maintien de la lame contact en position d'ouverture, comme montré à la figure 8.

Dans cette position, le courant ne passe plus par le moteur, donc celui-ci s'arrête. Par contre, le courant passe par la résistance qui s'échauffe et déforme la bilame. Au bout de quelques secondes, la bilame est suffisamment déformée pour permettre le retour de la lame (30) à la position représentée à la figure 7, dans laquelle elle ferme le circuit d'alimentation du moteur.

Cette solution est intéressante car permettant à l'utilisateur de changer de régime de fonctionnement par simple appui sur un bouton poussoir.

Comme il ressort de ce qui précède, l'invention apporte une grande amélioration à la technique existante en fournissant un dispositif de conception simple, puisque ne nécessitant qu'un moteur à une vitesse de rotation, d'un emploi pratique pour l'utilisateur, et extrêmement performant.

L'invention ne se limite pas à la seule forme d'exécution de ce dispositif, décrite ci-dessus. C'est ainsi notamment que la forme de la piste de guidage du doigt monté à une extrémité du levier de commande du volet pourrait être différente.

## Revendications

1. Dispositif de ventilation de locaux, du type comprenant un caisson à l'intérieur duquel est monté un groupe moto-ventilateur et dans lequel sont ménagées des ouvertures équipées de moyens de raccordement à des tubulures débouchant dans la cuisine et dans les différentes pièces techniques telles que salle d'eau et W.C., caractérisé en ce que l'ouverture (4) du caisson destinée au raccordement de la tubulure d'ébouchant dans la cuisine est équipée d'un volet (8) associé à des moyens élastiques (9) tendant à le manoeuvrer vers sa position de fermeture, ce volet étant équipé d'un organe (13) coopérant avec un guide (14) comportant deux butées (19, 22) correspondant à deux valeurs d'ouverture du volet et deux autres butées (16, 17) décalées l'une par rapport à l'autre, correspondant toutes deux à la position fermée du volet, le guide (14) du doigt (13) étant conformé de façon telle que le volet (8) étant en position fermée et le doigt étant en appui dans le fond de la première butée (16) de fermeture, la dépression créée par le ventilateur tendant à ouvrir le volet amène le doigt (13) en appui contre la première butée d'ouverture (22), l'arrêt du ventilateur à la suite duquel le volet revient en position fermée amène le doigt (13) en appui contre la seconde butée de fermeture (17), la mise en marche du ventilateur tendant à ouvrir le volet amène le doigt (13) en appui contre la seconde butée d'ouverture (19), et l'arrêt du ventilateur accompagné de la fermeture du volet (8) amène le doigt (13) en appui contre la première butée de fermeture (16).

2. Dispositif selon la revendication 1, caractérisé en ce que les moyens assurant le maintien du volet (8), associé à l'ouverture (4) reliée au conduit d'extraction de l'air de la cuisine, dans ses deux positions, et le passage d'une position à l'autre, sont constitués par un levier (12) situé du côté de l'intérieur ou de l'extérieur du caisson, dont une extrémité est articulée sur le volet autour d'une axe (10) parallèle à l'axe d'articulation du volet et dont l'autre extrémité est équipée d'un doigt (13) parallèle à l'axe d'articulation de celui-ci sur le volet, engagé dans une lumière (14) formant guide.

3. Dispositif selon la revendication 2, caractérisé en ce que la lumière de guidage (14) du doigt (13) de commande du volet (8), est constituée par une empreinte de forme générale triangulaire dont un des côtés (15) sensiblement parallèle en plan de l'ouverture (4) destinée à être obturée par le volet, comprend deux évidements (16, 17) séparés l'un de l'autre par un bec (18) formant les deux butées de fermeture du doigt, la partie centrale du triangle comportant une nervure (20) inclinée par rapport au côté (15) dans lequel sont ménagés les évidements (16, 17), une extrémité de cette nervure étant située en regard du premier évidement (16) et l'autre extrémité de celle-ci comportant un évidement (22) formant la première butée d'ouverture débouchant en regard de la paroi (23) du bec (18) délimitant pour partie le second évidement (17), la seconde butée d'ouverture (19) étant constituée par le troisième sommet de l'empreinte.

4. Dispositif selon l'une quelconque des revendications 1 à 3, caractérisé en ce que le volet (8) associé à l'ouverture (4) du caisson raccordée à la cuisine est solidaire d'un levier (24) portant des obturateurs (25) destinés à venir fermer totalement ou partiellement les ouvertures (5, 6) du caisson raccordées aux autres pièces techniques, lorsque le volet est en position d'ouverture maximale.

5. Dispositif selon l'une quelconque des revendications 1 à 4, caractérisé en ce que le circuit d'alimentation électrique du moteur (26) du ventilateur (3) comprend une lame de contact (30) pouvant être actionnée à l'ouverture par un bouton poussoir (32) vers une position dans laquelle elle est maintenue en position ouverte par une bilame (33), associée à une résistance (34), la bilame assurant le maintien de la lame (30) en position d'ouverture du contact électrique tant qu'elle n'a pas atteint une température prédéterminée fournie par chauffage de la résistance.

6. Dispositif selon l'une quelconque des revendications 1 à 5, caractérisé en ce que le ventilateur du groupe d'extraction est à une allure de fonctionnement.

7. Dispositif selon l'une quelconque des revendications 1 à 5, caractérisé en ce que le ventilateur du groupe d'extraction est à deux allures de fonctionnement.

8. Dispositif selon l'une quelconque des revendications 1 à 5, caractérisé en ce que le ventilateur du groupe d'extraction est à inversion du sens de rotation.

**Patentansprüche**

1. Vorrichtung zur Belüftung von Räumen mit einem Kasten, in dem eine Motor-Ventilator-Einheit montiert ist und an dem Öffnungen angebracht sind, die mit Mitteln für den Anschluss von Leitungen ausgestattet sind, die in die Küche und die verschiedenen Räume mit technischer Ausstattung, wie Badezimmer und WC, führen, dadurch gekennzeichet,

dass die für den Anschluss der in die Küche führenden Leitung bestimmte Öffnung (4) des Kastens mit einer Ventilklappe (8) ausgestattet ist, der federelastische Mittel (9) zugeordnet sind, die sie in Schliessstellung vorspannen,

dass diese Ventilklappe(8) mit einem Organ (13) ausgestattet ist, das mit einer Führungsanordnung (14) zusammenwirkt, die zwei Anschläge (19, 22) bildet, welche zwei unterschiedlichen Öffnungsstellungen der Ventilklappe entsprechen, sowie zwei gegeneinander versetzte weitere Anschläge (16, 17), die beide der Schliessstellung der Ventilklappe entsprechen,

und dass die Führungsanordnung (14) des Fingers (13) so ausgebildet ist,

— dass dann, wenn die Ventilklappe (8) sich in Schliessstellung befindet und der genannte Finger (13) sich am Boden des ersten (16) der beiden der Schliessstellung zugeordneten Anschläge (16, 17) befindet, der von dem Ventilator erzeugte, das Öffnen der Ventilklappe bewirkende Unterdruck den Finger (13) zur Anlage an dem der ersten Öffnungsstellung zugeordneten Anschlag (22) führt,

— dass das Anhalten des Ventilators, durch das die Ventilklappe in die Schliessstellung zurückgeführt wird, den Finger (13) zur Anlage an dem zweiten der Schliessstellung zugeordneten Anschlag (17) führt,

— dass das Wiedereinschalten des Ventilators und das dadurch bewirkte Öffnen der Ventilklappe den Finger (13) zur Anlage an dem der zweiten Öffnungsstellung zugeordneten Anschlag (19) führt,

— und dass das von dem Schliessen der Ventilklappe (8) begleitete Anhalten des Ventilators den Finger (13) zur Anlage an dem ersten der Schliessstellung zugeordneten Anschlag (16) führt.

2. Vorrichtung nach Anspruch 1, dadurch gekennzeichet, dass die Mittel, die das Halten der der mit der Luftabzugsleitung der Küche verbundenen Öffnung (4) zugeordneten Ventilklappe (8) in ihren beiden Positionen und den Übergang von einer Position in die andere Position ermöglichen, aus einem innerhalb oder ausserhalb des Kastens angeordneten Hebel (12) bestehen, der mit einem Ende um eine parallel zur Schwenkachse der Ventilklappe verlaufende Achse (10) drehbar an der Ventilklappe gelagert ist und dessen anderes Ende einen Finger (13) trägt, der parallel zur Drehachse des Hebels der Ventilklappe angeordnet ist und in eine Führungsöffnung (14) eingreift.

3. Vorrichtung nach Anspruch 2, dadurch gekennzeichet, dass die Führungsöffnung (14) zur Führung des Fingers (13) zur Steuerung der Ventilklappe (8) aus einer Einprägung besteht, die im wesentlichen die Form eines Dreiecks hat, von dem eine Seite (15) im annähernd parallel zur Ebene der durch die Ventilklappe (8) verschliessbaren Öffnung (4) verläuft und zwei Mulden (16, 17) aufweist, die durch eine Nase (18) voneinander getrennt sind und die beiden der Schliessstellung der Ventilklappe zugeordneten Anschläge für den Finger (13) bilden, dass im zentralen Bereich des Dreiecks eine Rippe (20) angeordnet ist, die gegenüber der Seite (15), in der die beiden Mulden (16, 17) ausgebildet sind, geneigt ist, dass ein Endbereich dieser Rippe der ersten Mulde (16) gegenüberliegt und ihr anderer Endbereich eine Mulde (22) aufweist, die den der ersten Öffnungsstellung zugeordneten Anschlag bildet und gegenüber der Wandung (23) der Nase (18) mündet, die die zweite Mulde (17) auf einer Seite begrenzt, und dass der der zweiten Öffnungsstellung angeordnete Anschlag (19) von der dritten Ecke der dreieckförmigen Vertiefung gebildet ist.

4. Vorrichtung nach einem der Ansprüche 1 bis 3, dadurch gekennzeichet, dass an der Ventilklappe (8), die der mit der Küche verbundenen Öffnung (4) des Kastens zugeordnet ist, ein Hebel (24) fest angebracht ist, der Verschlussorgane (25) trägt, die dazu dienen, die mit den anderen Räumen mit technischer Ausstattung verbundenen Öffnungen (5, 6) des Kastens ganz oder teilweise zu verschliessen, wenn die Ventilklappe (8) sich in der Position maximaler Öffnung befindet.

5. Vorrichtung nach einem der Ansprüche 1 bis 4, dadurch gekennzeichet, dass der Stromkreis zur elektrischen Speisung des Motors (26) des Ventilators (3) eine Kontaktfeder (30) enthält, die durch Betätigen einer Drucktaste (32) in eine Öffnungsstellung gebracht werden kann, in der sie von einem einem Heizwiderstand zugeordneten Bimetallkontakt (33) festgehalten werden kann, und dass der Bimetallkontakt (33) die Kontaktfeder (30) solange in Öffnungsstellung hält, bis sie durch ihre Erwärmung durch den Heizwiderstand eine vorbestimmte Temperatur erreicht.

6. Vorrichtung nach einem der Ansprüche 1 bis 5, dadurch gekennzeichet, dass der Ventilator der Abzugseinheit eine Betriebsgeschwindigkeit hat.

7. Vorrichtung nach einem der Ansprüche 1 bis 5, dadurch gekennzeichet, dass der Ventilator der Abzugseinheit zwei Betriebsgeschwindigkeiten hat.

8. Vorrichtung nach einem der Ansprüche 1 bis 5, dadurch gekennzeichet, dass der Ventilator der Abzugseinheit ein Ventilator mit umgekehrter Drehrichtung ist.

**Claims**

1. A device for the ventilation of premises of the type comprising a casing in the interior of which a motorised ventilator assembly is mounted and in which openings are provided that are equipped with means to connect them to ducts opening out into the kitchen and various locations such as a wash room and W.C., characterised in that the opening (4) of the casing intended for connection to the duct that opens out into the kitchen is equipped with a shutter (8) associated with elastic means (9) tending to push it towards its closed position, this shutter being equipped with a rod (13) operating in association with a guide (14) that comprises two stops (19, 22) corresponding to two degrees of opening of the shutter, and two other stops (16, 17) displaced relatively to one another, both of which correspond to the closed position of the shutter, the guide (14) of the rod (13) being shaped in such a manner that if the shutter (8) is in the closed position and the rod is pressed against the base of the first closing stop (16), the partial vacuum created by the ventilator fan tending to open the shutter causes the rod (13) to press against the first opening stop (22); if the ventilator is then switched off, following which the shutter returns to the closed position, the rod (13) is caused to press against the second closing stop (17); if the ventilator is re-started, tending to open the shutter, this causes the rod (13) to press against the second opening stop (19) and switching off the ventilator which results in the closing of shutter (8) then causes the rod (13) to press against the first closing stop (16).

2. An appliance according to Claim 1, characterised in that the means that ensure the functioning of the shutter (8) associated with the opening (4) connected to the duct for extraction of air from the kitchen, in its two positions, and the change-over from one position to the other, consists of a lever (12) situated on the inside or outside of the casing, one end of which is hinged to the shutter around an axis (10) that is parallel to the axis of articulation of the shutter, and the other end of which is equipped with a rod (13), parallel to the lever/shutter hinge axis and engaging into a depression (14) that forms a guide.

3. An appliance according to Claim 2, characterised in that the guidance depression (14) for the actuating rod (13) of the shutter (8) consists of a generally triangular pressing one of the sides (15) of which, approximately parallel to the opening (4) that it is the purpose of the shutter to close, comprises two grooves (16, 17) separated from one another by a projection (18) and forming the two closing stops for the rod, the central portion of the triangle comprising a raised rib (20) inclined relatively to the side (15) in which the grooves (16, 17) are provided, one end of this rib facing the first groove (16) and the other end comprising a groove (22) that forms the first opening stop facing the inner wall (23) of projection (18), part of which bounds the second groove (17), the second opening stop (19) being formed by the third apex of the pressing.

4. An appliance according to any one of Claims 1 to 3, characterised in that the shutter (8) associated with the opening (4) of the casing that is connected to the kitchen is ridigly connected to a lever (24) that carries closing devices (25) intended to close either totally or partially the openings (5, 6) of the casing that are connected to the other locations when the shutter (8) is in its maximum opening position.

5. An appliance according to any one of Claims 1 to 4, characterised in that the electric supply circuit to the motor (26) of ventilator (3) comprises a contact blade (30) operably by a push-button (32) to an open position where it is maintained in the open state by a bimetallic strip (33) associated with a resistance (34), the bimetallic strip ensuring that the blade (30) is maintained with its electrical contacts in the open position so long as the bimetallic strip has not reached a specified temperature resulting from the heating of the resistance.

6. An appliance according to any one of Claims 1 to 5, characterised in that the ventilator of the air-extraction assembly operates at one speed only.

7. An appliance according to any one of Claims 1 to 5, characterised in that the ventilator of the air-extraction assembly has two operating speeds.

8. An appliance according to any one of claims 1 to 5, characterised in that the direction of rotation of the ventilator of the air-extraction assembly is reversable.

FIG.1

FIG.2

FIG.3

FIG_4

FIG_5

FIG.6

FIG.7

FIG.8